(19) Europäisches Patentamt

European Patent Office

Office européen des brevets

(11) **EP 0 794 659 B1**

(12) **EUROPÄISCHE PATENTSCHRIFT**

(45) Veröffentlichungstag und Bekanntmachung des Hinweises auf die Patenterteilung:
**27.10.2004 Patentblatt 2004/44**

(51) Int Cl.$^7$: **H04N 5/21**

(21) Anmeldenummer: **97200523.5**

(22) Anmeldetag: **25.02.1997**

(54) **Störsignalbefreiung von Videosignalen**

Suppression of disturbance signals in video signals

Suppression des signaux de perturbation dans les signaux vidéo

(84) Benannte Vertragsstaaten:
**DE FR GB SE**

(30) Priorität: **09.03.1996 DE 19609197**

(43) Veröffentlichungstag der Anmeldung:
**10.09.1997 Patentblatt 1997/37**

(73) Patentinhaber:
• **Philips Intellectual Property & Standards GmbH
20099 Hamburg (DE)**
Benannte Vertragsstaaten:
**DE**
• **Koninklijke Philips Electronics N.V.
5621 BA Eindhoven (NL)**
Benannte Vertragsstaaten:
**FR GB SE**

(72) Erfinder: **Wischermann, G., Dipl.-Ing.
22335 Hamburg (DE)**

(74) Vertreter: **Volmer, Georg, Dipl.-Ing. et al
Philips Intellectual Property & Standards GmbH,
Weisshausstrasse 2
52066 Aachen (DE)**

(56) Entgegenhaltungen:
**DE-A- 4 319 342          DE-A- 4 326 390**

**Beschreibung**

Die Erfindung betrifft ein videotechnisches Gerät mit einer Schaltungsanordnung zur Störsignalbefreiung von Videosignalen mittels bewegungsadaptiver Filterung mit einem Transversalfilter zweiter oder höherer Ordnung, welches von einem Bewegungsdetektor gesteuert wird. Die Erfindung betrifft ferner die Schaltungsanordnung selbst als auch ein Verfahren zur Störsignalbefreiung.

Aus der DE 43 26 390 A1 ist ein Verfahren zur Störsignalbefreiung von Videosignalen mittels bewegungsadaptiver Filterung mit einem Transversalfilter zweiter Ordnung bekannt. Hierbei werden von jeweils drei aueinanderfolgenden Bildern Videosignale abgeleitet und nach Bewertung mit Koeffizienten miteinander addiert. Die Koeffizienten werden von einem Vorwärts- bzw. Rückwärtsbewegungsdetektor erzeugt. Wenn keine oder nur sehr geringe Bewegung auftritt - die Unterschiede zwischen den abgeleiteten Videosignalen sind kleiner als ein bestimmter vorgegebener Schwellwert -, läßt sich eine maximale Störabstandsverbesserung von 4,8 dB erreichen. In diesem Fall ist das Ausgangssignal der arithmetische Mittelwert der drei Bilder. Bei stärkerer Bewegung treten im allgemeinen große Amplitudenunterschiede zwischen den drei Bildern auf. Um in diesem Fall ein "Verschmieren" der unterschiedlichen Bewegungsphasen zu vermeiden, muß auf das Referenzbild - das ist das mittlere Bild - übergeblendet werden. Dazu werden die Koeffizienten der anderen Bilder gegen 0 gesteuert und der Koeffizient des Referenzbildes gegen 1.

Eine mögliche Schaltungsanordnung für einen Bewegungsdetektor ist in der DE 43 19 342 A1 angegeben. Er besteht aus einem Vorwärtsdetektor, der, bezogen auf das Referenzbild, den Unterschied zum nachfolgenden Bild auswertet. Ein identisch aufgebauter Rückwärtsdetektor, der entsprechend den Unterschied zum vorangegangenen Bild auswertet, kann dann für eine mehrdimensionale Bewegungsdetektion hinzugefügt werden. Hierbei werden also die Beträge der Differenzen von jeweils zwei aufeinanderfolgenden Bildern gebildet und jeweils einer Tiefpaßfilterung unterworfen, um hochfrequente Rauschanteile zu unterdrücken. Die Tiefpaßfilter können als zweidimensionale (horizontale und vertikale) Transversal- oder Medianfilter ausgeführt sein. Um ein Ansprechen der Detektoren bei nur geringer Bewegung oder restlichen Rauschanteilen zu verhindern, werden die Signale über eine einstellbare Schwellwertkennlinie geführt. Anschließend werden die Koeffizienten in einem programmierbaren Lesespeicher (PROM) entsprechend einer abfallenden Kennlinie generiert. Diese Kennlinie beginnt für den statischen Fall (keine oder nur geringe Bewegung) bei 1/3 und fällt dann z.B. mit exponentieller Charakteristik auf Null ab.

Bei Untersuchungen der Bewegungsdetektoren bezüglich der Verbesserungen der Störsignalbefreiung von Videosignalen wurde festgestellt, daß eine maximale Störsignalreduktion erreicht wird, wenn beide Bewegungsdetektoren nicht ansprechen, d.h. also bei unbewegten Bildern, wobei der Störabstandsgewinn 4,8 dB beträgt. Eine mittlere Störsignalreduktion wird erreicht, wenn nur einer der Bewegungsdetektoren anspricht, wobei durch die Bewertung der Videosignale mit 2/3 für das Referenzbildsignal und 1/3 für das Signal des unbewegten Bildes ein Störabstandsgewinn von 2,5 dB erzielt wird. Wenn beide Bewegungsdetektoren ansprechen, ist keine Störsignalreduktion möglich, d.h. der Störabstandsgewinn ist 0 dB. Somit wird deutlich, daß der herkömmliche Bewegungsdetektor eigentlich nur in wenigen Fällen eine Störabstandsverbesserung zuläßt. Dabei wird nicht einmal für den einfachen Fall, daß nur ein Bewegungsdetektor anspricht, eine optimale Filterung erreicht, denn dabei müßte eine optimale Filterung mit Koeffizienten von je 1/2 für das Referenzbildsignal und das Signal des unbewegten Bildes erfolgen. D.h., die beiden Bilder, zwischen denen keine Bewegung auftritt, müßten mit jeweils 50 % gemittelt werden, was zu einer Störabstandsverbesserung von 3 dB führen würde. Der Grund für dieses nachteilige Verhalten liegt darin, daß die Betriebsweise des einen Bewegungsdetektors sich nicht auf die des anderen auswirkt.

Der Erfindung liegt daher die Aufgabe zugrunde, eine Schaltungsanordnung der eingangs genannten Art anzugeben, bei der zur Störabstandsverbesserung die Bewegung in der zweidimensionalen Ebene detektiert wird.

Diese Aufgabe wird durch die kennzeichnenden Merkmale der Patentansprüche 1 und 6 gelöst.

Die erfindungsgemäße Schaltungsanordnung hat den Vorteil, daß in allen Bereichen der zweidimensionalen Ebene eine Störsignalunterdrückung möglich ist.

Durch die in den Unteransprüchen aufgeführten Maßnahmen sind vorteilhafte Weiterbildungen und Verbesserungen der im Patentanspruch 1 angegebenen Schaltungsanordnung möglich.

Vorzugsweise sind die Koeffizienten zur Steuerung des Transversalfilters in einer Tabelle abgelegt, welche mit dem jeweiligen Winkel- und dem Radiussignal angesteuert wird. In einer möglichen Ausgestaltung sind die Koeffizienten zur Steuerung des Transversalfilters unterhalb eines Grenzradius konstant und hängen nicht vom Winkel ab.

In einer Ausführungsform der Erfindung werden die von drei zeitlich aufeinanderfolgenden Fernsehbildern abgeleiteten Videosignale nach Differenzbildung von jeweils zwei der aufeinanderfolgenden Videosignale einer Koordinatentransformationseinrichtung zur Umwandlung der in kartesischen Koordinaten vorliegenden Signale in Polarkoordinatensignale zugeführt. Die dem jeweiligen Winkel und dem entsprechenden Radius darstellenden Signale der Transformationseinrichtung werden vorzugsweise einem eine Tabelle enthaltenden programmierbaren Lesespeicher zugeführt, an dessen Ausgängen die erzeugten Koeffizientensignale zur Steuerung des Transversalfilters abnehmbar sind.

Vorteilhafterweise ist zwischen jeder Differenzbildungsstufe und der Transformationseinrichtung je ein Tiefpaßfilter angeordnet. Desweiteren ist vorzugsweise an den Ausgängen des programmierbaren Lesespeichers je ein weiteres Tiefpaßfilter vorgesehen. Durch Rauschen bedingte Änderungen der Koeffizienten lassen sich dadurch unterdrücken, daß zwischen dem programmierbaren Lesespeicher und jedem Tiefpaßfilter je eine Hystereseeinrichtung vorgesehen ist. Hierbei enthält die Hystereseeinrichtung vorzugsweise eine Bildpunkt-, Zeilen- oder Bildverzögerungsanordnung für die Erzeugung einer Hysteresekennlinie mit horizontaler, vertikaler oder zeitlicher Wirkung.

Vorzugsweise ist eine Einstelleinrichtung vorgesehen, mit welcher die Einstellung des Grenzradius im programmierbaren Lesespeicher, die Grenzfrequenzen der Tiefpaßfilter sowie das Ausmaß der Hysterese in den Hystereseeinrichtungen verändert werden können. Wahlweise kann vorgesehen sein die Einstellungen vom Benutzer manuell zu verändern oder nachzuführen oder die Einstellungen proportional zur Stärke des Rauschens automatisch nachzuführen.

Ausführungsbeispiele der Erfindung sind in der Zeichnung dargestellt und in der nachfolgenden Beschreibung näher erläutert. Es zeigen:

Fig. 1    ein Blockschaltbild eines bekannten adaptiven Transversalfilters,

Fig. 2    ein Blockschaltbild eines erfindungsgemäßen zweidimensionalen Bewegungsdetektors,

Fig. 3    ein Diagramm mit sechs Sektoren in der Bewegungsebene eines kartesischen Koordinatensystems,

Fig. 4    die Störsignalreduktionsbereiche der erfindungsgemäßen Schaltungsanordnung im kartesischen Koordinatensystem,

Fig. 5    ein Blockschaltbild der Hystereseeinrichtung,

Fig. 6    ein Blockschaltbild eines erfindungsgemäßen Transversalfilters dritter Ordnung,

Fig. 7    ein Blockschaltbild eines weiteren erfindungsgemäßen Transversalfilters dritter Ordnung.

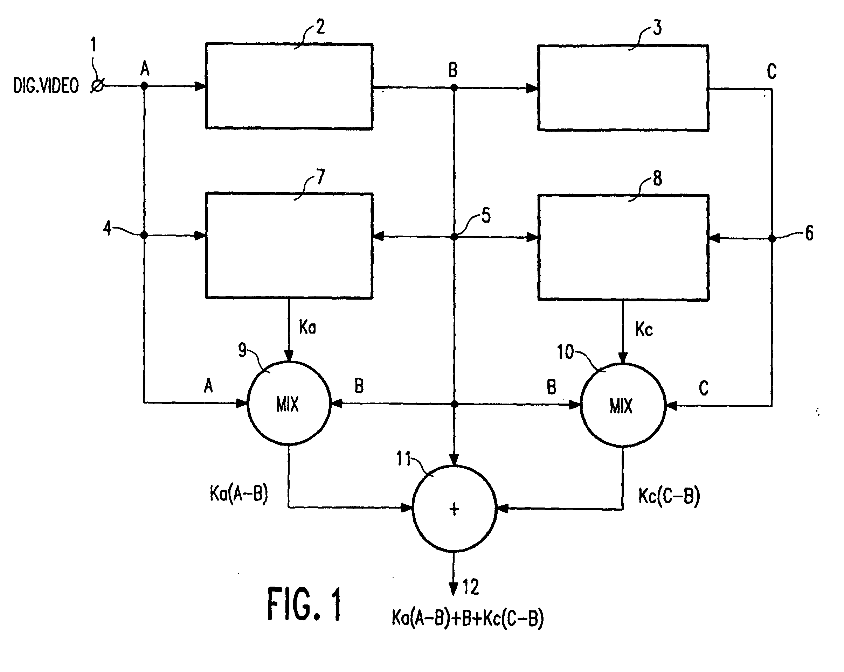

Dem in Fig. 1 dargestellten bewegungsadaptiven Transversalfilter zweiter Ordnung gemäß dem Stand der Technik werden die zu filternden (digitalen) Videosignale über Klemme 1 zugeführt und in zwei Verzögerungseinrichtungen 2 und 3 jeweils um eine Bildperiode verzögert, so daß an den Punkten 4, 5, 6 die Signale dreier aufeinanderfolgender Bilder A, B und C gleichzeitig zur Verfügung stehen. Die Videosignale der Bilder A und B werden einem Vorwärtsbewegungsdetektor 7 zur Erzeugung des Koeffizienten Ka und die Videosignale der Bilder B und C einem Rückwärtsbewegungsdetektor 8 zur Erzeugung des Koeffizienten Kc zugeführt. Außerdem werden die genannten Videosignale gleichzeitig je einer Mischstufe 9 bzw. 10 zugeleitet, an deren jeweiligen Steuereingang der Koeffizient Ka bzw. Kc anliegt, so daß am Ausgang der Stufe 9 ein Signal Ka(A-B) und am Ausgang der Stufe 10 ein Signal Kc (C-B) abnehmbar ist. Diese beiden Ausgangssignale werden nun einer Addierstufe 11 zugeführt, an deren dritten Eingang das Videosignal des Bildes B anliegt. Am Ausgang der Addierstufe 11 ist somit ein Ausgangssignal Ka(A-B) + B + Kc(C-B) abnehmbar.

Wie bereits oben ausgeführt, steuern die von den Detektoren 7 und 8 erzeugten Koeffizienten Ka und Kc die Stufen 9 und 10 so, daß bei geringfügiger Bewegung in den Bildern das Ausgangssignal an der Stufe 11 den arithmetischen Mittelwert der drei Bilder A, B und C darstellt und somit die maximale Störabstandsverbesserung von 4,8 dB erreicht wird. Bei stärkerer Bewegung in den Bildern A, B und C werden die Koeffizienten Ka und Kc gegen 0 gesteuert, so daß am Ausgang das Videosignal des Referenzbildes B abnehmbar ist. Hierbei wäre dann der Störabstandsgewinn 0 dB. Spricht nur einer der Detektoren 7 bzw. 8 an, so daß entweder Ka oder Kc zu 0 wird, so ergibt sich - da das jeweils andere Videosignal mit 1/3 und das Referenzbildsignal mit 2/3 bewertet wird - ein Störabstandsgewinn von 2,5 dB.

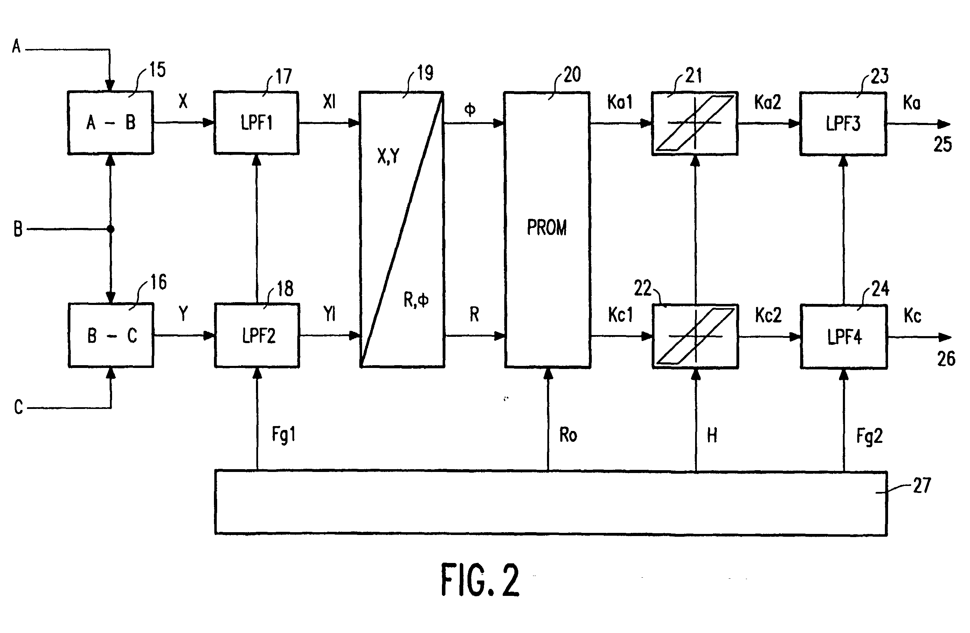

Zur Verbesserung des Störabstandsgewinns ist in Fig. 2 ein zweidimensionaler Bewegungsdetektor zur Erzeugung der Koeffizienten Ka und Kc dargestellt. An den Eingängen des Bewegungsdetektors liegen die Videosignale der Bilder A, B und C an und werden zwei Differenzstufen 15 und 16 zugeführt. An den Ausgängen der Stufen 15 und 16 sind die Bild-zu-Bild-Differenzsignale X und Y abnehmbar. Diese Signale X und Y werden zunächst (optional) einer horizontalen und vertikalen Tiefpaßfilterung unterworfen, um hochfrequente Rauschanteile zu unterdrücken. Die Ausgangssignale XL und YL der Filter 17 und 18 werden dann einer Koordinaten-Transformationseinrichtung 19 zur Umwandlung der in kartesischen Koordinaten vorliegenden Signale in Polarkoordinatensignale $\Phi$ und R zugeführt. In einem nachfolgenden programmierbaren Nur-Lesespeicher (PROM) 20 sind die Koeffizienten Ka1 und Kc1 in einer Tabelle abgelegt, welche mit dem Winkelsignal $\Phi$ und dem Radiussignal R angesteuert wird. Die von dem Speicher 20 abgegebenen Signale Ka1 und Kc1 sind unterhalb eines Grenzradius R0 konstant und hängen nicht vom Winkel ab, während sie oberhalb eines Grenzradius R0 nur vom Winkel abhängen.

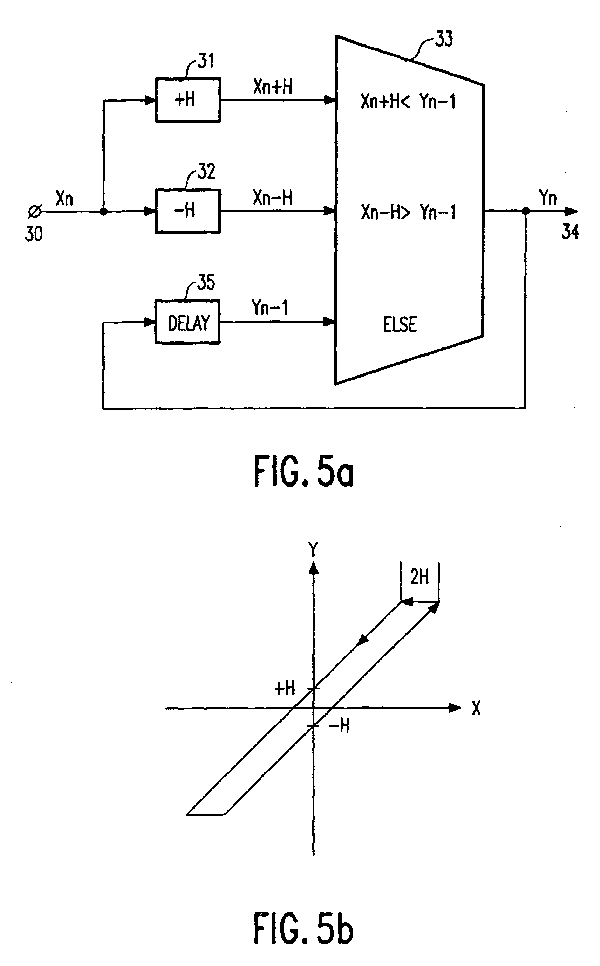

Die Ausgangssignale Ka1 und Kc1 werden nun nicht direkt zur Koeffizienten-Steuerung des Transversalfilters verwendet, sondern zunächst noch über Hystereseeinrichtungen 21 bzw. 22 geführt, welche in Verbindung mit Fig. 5 noch näher erläutert werden. Die Ausgangssignale Ka2 und Kc2 der Hystereseeinrichtungen 21 und 22 werden über je ein weiteres horizontales und vertikales Tiefpaßfilter 23 bzw. 24 geführt, um restliche Rauschanteile im Bewegungsdetektor zu unterdrücken. An den Ausgängen 25 und 26 der Filter 23 und 24 sind dann die zur Steuerung des Transversalfilters vorgesehenen Koeffizienten Ka und Kc abnehmbar. Im Hinblick auf eine optimale Störsignalunterdrückung sollten die Grenzfrequenzen der Tiefpaßfilter 17 und 18 sowie 23 und 24 und auch die Größe der Hysterese H und der Grenzradius R0 proportional zum Störabstand des Eingangssignals von außen nachgeführt werden. Dies ist mit Hilfe der Einstelleinrichtung 27 möglich, welche entweder vom Benutzer manuell oder durch eine automatische Messung des Grundrauschens im Videosignal - wie in DE 41 27 404 A1 oder DE 43 19 343 A1 angegeben - nachgeführt werden.

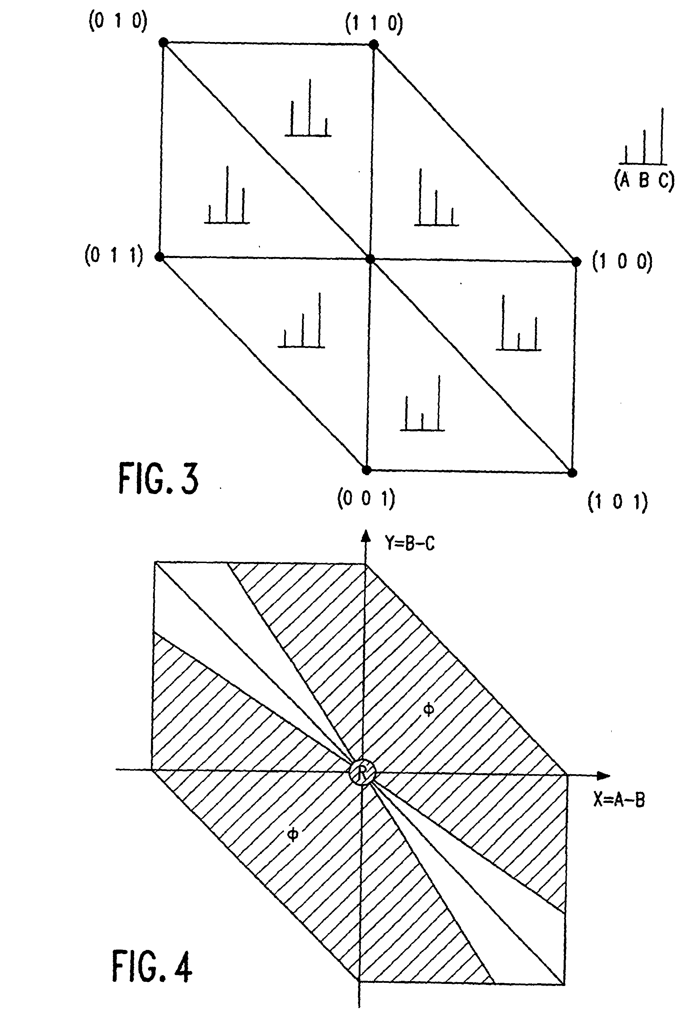

Die in Fig. 3 dargestellte X/Y-Bewegungsebene ist in sechs Sektoren aufgeteilt. Die Größenverhältnisse der Bilder A, B und C sind anhand der in den Sektoren dargestellten Strichlinien grafisch veranschaulicht. Das Sechseck in der X/Y-Ebene wird durch die 0-1 Kombinationen aus A, B und C begrenzt. Im Koordinatenursprung werden alle unbewegten Bildpunkte mit der Eigenschaft A = B = C abgebildet. Die beiden Eckpunkte (A B C) = (0 1 0) und (A B C) = (1 0 1) kennzeichnen die - 45°Diagonale in der X/Y-Ebene mit der Eigenschaft, daß die Amplituden der Bilder A und C identisch sind, aber einen großen Unterschied zum Referenzbild B aufweisen. Dies ist die Gerade, auf die z.B. bei unbewegten Bildern statistische Störungen, wie Filmstaub und Filmschmutz abgebildet werden. Entlang dieser Geraden und in der unmittelbaren Umgebung ist offensichtlich keine Rauschreduktion durch Mittelung von A, B und C möglich, da das Referenzbild B keine Korrelation zum vorangehenden oder nachfolgenden Bild aufweist. Ein Verfahren zur Erkennung von Filmstaub und Filmschmutz ist in DE 43 43 095 A1 angegeben.

Die +45°Diagonale (in der Fig. nicht explizit angegeben) weist genau die entgegengesetzte Eigenschaft auf. Die Amplitude des Referenzbildes B liegt in der Mitte von A und C, z.B. (A B C = (0 1/2 1). Hier liefert die arithmetische Mittelung von A, B und C exakt wieder die Amplitude von B = 1/2, und zwar mit einem Störabstandsgewinn von 4,8 dB. Es erscheint plausibel, daß durch geeignete Wahl der Koeffizienten Ka, Kb und Kc im gesamten ersten und dritten Quadranten der X/Y-Ebene eine Störabstandsverbesserung im Bereich von 3 bis 4,8 dB möglich ist.

Daß jedoch nicht nur der komplette erste und dritte Quadrant, sondern auch überwiegende Teile der übrigen vier Sektoren für die Rauschreduktion genutzt werden können, ist aus Fig. 4 erkennbar, in welcher die Störsignalreduktionsbereiche in der X/Y-Ebene dargestellt sind. In der Umgebung des Ursprungs (Bereich R) soll bis zu einem Grenzradius R0 der konstante Koeffizientensatz 1/3-1/3-1/3 Gültigkeit haben. In den mit Φ gekennzeichneten Bereichen gelten für Ka, Kb und Kc folgende aus den Transformationsgleichungen $X = R * COS \Phi$ und $Y = R * SIN \Phi$ abgeleiteten Koeffizientengleichungen:

$$Kb = 1 / (2 + SIN\ 2\ \Phi)$$

$$Ka = 0{,}5 * (1 + SIN\ 2\ \Phi - COS\ 2\ \Phi) / (2 + SIN\ 2\ \Phi)$$

$$Kc = 0{,}5 * (1 + SIN\ 2\ \Phi + COS\ 2\ \Phi) / (2 + SIN\ 2\ \Phi)$$

In den beiden weißen Sektoren werden impulsartige Störungen abgebildet. Diese können gemäß DE 43 43 095 A1 durch mediane Filterung von A, B und C eliminiert werden. Alternativ kann mit einem Transversalfilter in diesem Bereich durch eine Filterung mit dem Koeffizienten-Satz 1/2-0-1/2 das gleiche erreicht werden.

Fig. 5a zeigt eine Einrichtung zur digitalen Realisierung einer Hysterese. Am Eingang 30 liegt beispielsweise ein Signal Xn an, das zwei Hysterese-Einheiten 31 und 32 zugeführt wird, deren Ausgänge an einen Multiplexer 33 geführt sind. Der Ausgang des Multiplexers 33 dient einerseits als Ausgang 34 und ist andererseits über eine Verzögerungseinrichtung 35 auf einen weiteren Eingang des Multiplexers 33 zurückgeführt.

Die Hysterese im Koeffizientensignalweg sorgt dafür, daß kleine Änderungen der Koeffizienten (bedingt durch Rauschen) unterdrückt werden, während größere Abweichungen (bedingt durch Bewegung) im wesentlichen durchgereicht werden.

Die in Fig. 5b dargestellte Hysterese-Kennlinie zeigt folgende Wirkung: Das Ausgangssignal Yn folgt einem ansteigenden Eingangssignal Xn mit der Funktion $Y = X - H$ und einem abfallenden Eingangssignal mit der Funktion $Y = X + H$. Im Übergangsbereich (von steigend nach fallend bzw. umgekehrt) bleibt das Ausgangssignal konstant $Yn = Yn - 1$, solange die Änderung des Eingangssignals kleiner als $2 * H$ bleibt. Die Änderung des Eingangssignals kann bezogen werden auf den vorangegangenen Bildpunkt, die vorangegangene Zeile oder das vorangegangene Bild. Dementsprechend kann in Fig. 5a die Verzögerungseinheit 35 als Bildpunkt-, Zeilen- oder Bildverzögerung ausgeführt sein.

Für die erfindungsgemäße Schaltungsanordnung kommen prinzipiell alle drei Varianten in Frage. Zur Unterdrückung von sehr niederfrequenten Rauschanteilen ist vorzugsweise eine Hysterese mit einer Bildverzögerung am besten geeignet.

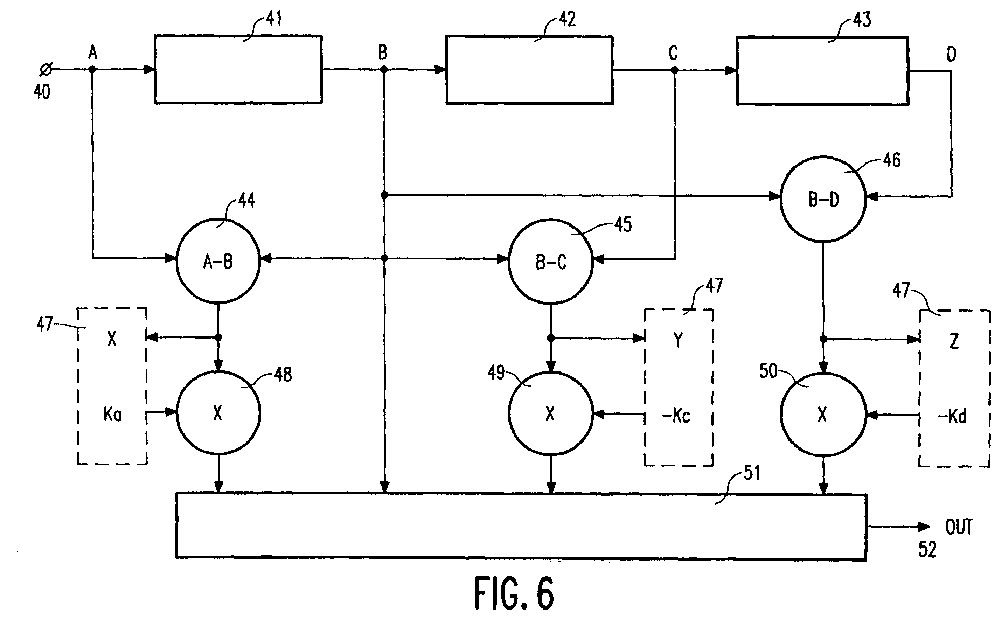

In Fig. 6 ist eine Realisierung des Transversalfilters dritter Ordnung dargestellt, dem das Videosignal über Klemme 40 zugeführt wird. Hierbei sind drei Bildspeicher 41, 42, 43 vorgesehen, so daß vier aufeinanderfolgende Bilder A, B, C, D gleichzeitig zur Verfügung stehen. In den Differenzstufen 44, 45, 46 werden von den Videosignalen der Bilder A, B, C, D die Differenzvideosignale X = A - B , X = B - C und Z = B - D abgeleitet. Diese Signale X, Y und Z werden dem in der Fig. 6 gestrichelt angedeuteten Bewegungsdetektor 47 zugeführt, der entsprechend dem in Fig. 2 Gezeigten aufgebaut ist und die Koeffizienten Ka, Kc und Kd generiert. Die Koeffizienten Ka, -Kc und -Kd werden dann zur Steuerung der Differenzvideosignale an die Multiplizierstufen 48, 49, 50 geleitet. Die somit bewerteten, an den Ausgängen der Multiplizierstufen 48, 49, 50 abnehmbaren Videosignale und das (nicht bewertete) Videosignal des Referenzbildes B werden schließlich den Eingängen einer Addierstufe 51 zugeführt, an deren Ausgang 52 dann das entsprechend gefilterte Videosignal abnehmbar ist.

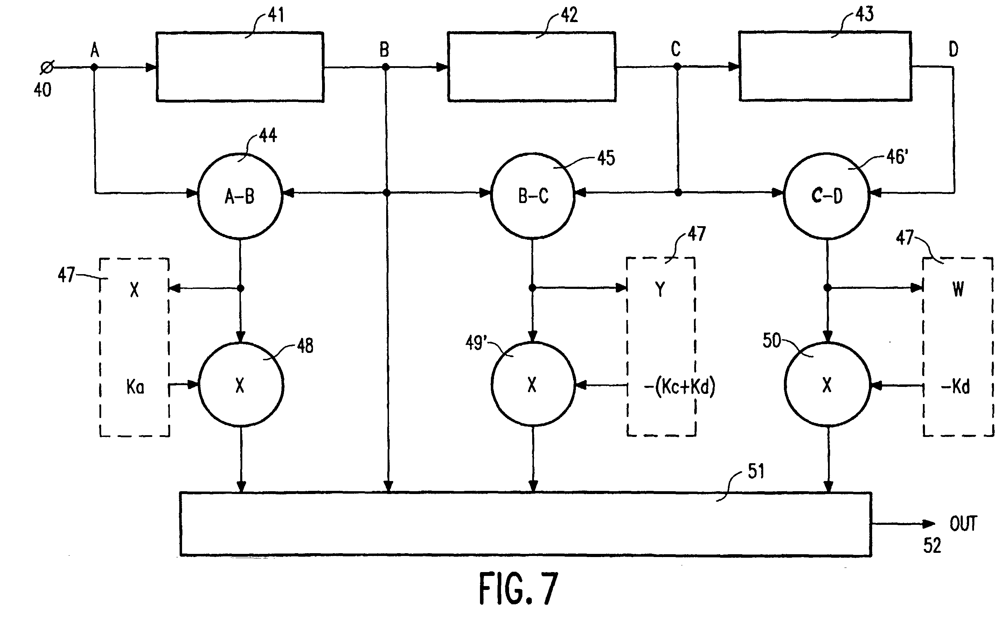

Fig. 7 zeigt eine alternative Realisierungsmöglichkeit des Transversalfilters dritter Ordnung. Gegenüber dem in Fig. 6 dargestellten Transversalfilter besteht der Unterschied lediglich darin, daß das dritte Referenzsignal nicht auf das Referenzbild B bezogen wird, sondern mit B = (C - D) durch die Differenzstufe 46' gebildet wird. Am Steuereingang der Multiplizierstufe 49' liegt somit das Koeffizientensignal -(Kc + Kd) an.

Bei diesen Transversalfiltern dritter Ordnung bilden die Differenzsignale X, Y und Z Bewegungsvektoren in einem dreidimensionalen Bewegungsraum. Auch hier hängen die Koeffizienten nicht vom Abstand R zum Ursprung ab, sondern nur vom Winkel im Raum. Somit bietet sich also eine Transformation in Kugelkoordinaten an:

$$X = R * COS\ \Phi * COS\ \vartheta\ ,\ Y = R * SIN\ \Phi * COS\ \vartheta,\ Z = R * SIN\ \vartheta$$

Damit hängen die Koeffizienten Ka, Kc und Kd von nur zwei Variablen, den Winkeln $\Phi$ und $\vartheta$ ab.

**Patentansprüche**

1. Schaltungsanordnung zur Störsignalbefreiung von Videosignalen mittels bewegungsadaptiver Filterung mit einem Transversalfilter (48-51) zweiter oder höherer Ordnung, welches von einem Bewegungsdetektor (47) gesteuert wird,
**dadurch gekennzeichnet,**
**daß** ein mehrdimensionaler Bewegungsdetektor (Fig. 2) zur Erzeugung von Koeffizienten (Ka, Kc, Kd) zur Steuerung des Transversalfilters vorgesehen ist und daß der Bewegungsdetektor Mittel (19) zur Umwandlung von in kartesischen Koordinaten vorliegenden Signalen (X1,Y1), die aus wenigstens zwei aus dem Videosignal erzeugten Bild-zu-Bild-Differenzsignalen (X,Y) abgeleitet sind, in Polar- oder Kugelkoordinatensignale (R,φ;R,φ,ϑ) vorgesehen ist (19), und
**daß** der Bewegungsdetektor Mittel (20) zur Ableitung der Koeffizienten aus den Polar- oder Kugelkoordinatensignalen aufweist, wobei oberhalt eines Grenzradius der Polar- oder Kugelkoordinaten die Koeffizienten nur vom Winkel der genannten Koordinaten abhängen.

2. Schaltungsanordnung nach Anspruch 1,
**dadurch gekennzeichnet,**
**daß** die Koeffizienten Kb, Ka, Kc zur Steuerung des Transversalfilters oberhalb des Grenzradius (R0) nur vom Winkel (Φ) abhängen gemäß den Gleichungen

$$Kb = 1 / (2 + SIN\ 2\ \Phi)$$

$$Ka = 0{,}5 * (1 + SIN\ 2\ \Phi - COS\ 2\ \Phi) / (2 + SIN\ 2\ \Phi)$$

$$Kc = 0{,}5 * (1 + SIN\ 2\ \Phi + COS\ 2\ \Phi) / (2 + SIN\ 2\ \Phi)$$

wobei für die Bild-zu-Bild-Differenzsignale X = R cos Φ und Y = R sin Φ mit R als Radiussignal gilt.

**3.** Schaltungsanordnung nach Anspruch 1,
**dadurch gekennzeichnet,**
**daß** die Koeffizienten zur Steuerung des Transversalfilters oberhalb des Grenzradius nur vom Winkel (Φ) abhängen gemäß den Gleichungen

$$Kb = 1/4 * (5 + SIN\ 2\ \Phi) / (2 + SIN\ 2\ \Phi)$$

$$Ka = 3/8 * (1 + SIN\ 2\ \Phi - COS\ 2\ \Phi) / (2 + SIN\ 2\ \Phi)$$

$$Kc = 3/8 * (1 + SIN\ 2\ \Phi + COS\ 2\ \Phi) / (2 + SIN\ 2\ \Phi)$$

wobei für die Bild-zu-Bild-Differenzsignale X = R cos Φ und Y = R sin Φ mit R als Radiussignal gilt.

**4.** Schaltungsanordnung nach Anspruch 1,
**dadurch gekennzeichnet,**
**daß** die von drei zeitlich aufeinanderfolgenden Fernsehbildern (A, B, C) abgeleiteten Bild-zu-Bild-Differenzsignale (X, Y, Z) aus jeweils zwei der aufeinanderfolgenden Fernsehbilder ermittelt werden und einer Koordinatentransformationseinrichtung (19) zur Umwandlung der in kartesischen Koordinaten vorliegenden Signale in Kugelkoordinatensignale zugeführt werden,
**daß** die den jeweiligen Winkel und den entsprechenden Radius darstellenden Ausgangssignale der Transformationseinrichtung (19) einem eine Tabelle enthaltenden programmierbaren Lesespeicher (20) zugeführt werden und daß an dessen Ausgängen die erzeugten Koeffizientensignale (Ka, Kc, Kd) zur Steuerung des Transversalfilters abnehmbar sind.

**5.** Videotechnisches Gerät mit einer Schaltungsanordnung nach Anspruch 1.

**6.** Verfahren zur Störsignalbefreiung von Videosignalen mittels bewegungsadaptiver Filterung mit einem Transversalfilter zweiter oder höherer Ordnung, welches von einem Bewegungsdetektor gesteuert wird,
**dadurch gekennzeichnet,**
**daß** ein mehrdimensionaler Bewegungsdetektor (Fig. 2) Koeffizienten zur Steuerung des Transversalfilters erzeugt und
**daß** der Bewegungsdetektor in kartesischen Koordinaten vorliegende Signale (X1, Y1), die aus wenigstens zwei aus dem Videosignal erzeugten Bild-zu-Bild-Differenzsignalen (X, Y) abgeleitet sind, in Polar- oder Kugelkoordinatensignale umwandelt (19), und
**daß** der Bewegungsdetektor die Koeffizienten aus den Polar- oder Kugelkoordinatensignalen ableitet (20), wobei oberhalt eines Grenzradius der Polar- oder Kugelkoordinaten die Koeffizienten nur vom Winkel der genannten Koordinaten abhängen.

**Claims**

**1.** A circuit arrangement for eliminating interference signals from video signals by means of motion-adaptive filtering with a second or higher-order transversal filter (48-51) which is controlled by a motion detector (47), **characterized in that** a multidimensional motion detector (Fig. 2) is provided to generate coefficients (Ka, Kc, Kd) for controlling the transversal filter, **in that** the motion detector comprises means (19) for converting signals (X1, Y1) in Cartesian coordinates, derived from at least two picture-to-picture difference signals (X, Y) generated from the video signal, into polar or spherical coordinate signals (R, Φ; R, Φ, θ), and **in that** the motion detector comprises means (20) for deriving the coefficients from the polar or spherical coordinate signals, wherein, above a limit radius of the polar or spherical coordinates, the coefficients depend only on the angle of said coordinates.

**2.** A circuit arrangement as claimed in claim 1, **characterized in that** the coefficients Kb, Ka, Kc for controlling the transversal filter above the limit radius (R0) only depend on the angle (Φ) in accordance with the equations

$$Kb = 1 / (2 + SIN\ 2\ \Phi)$$

$$Ka = 0.5 * (1 + SIN\ 2\ \Phi - COS\ 2\ \Phi) / (2 + SIN\ 2\ \Phi)$$

$$Kc = 0.5 * (1 + SIN\ 2\ \Phi + COS\ 2\ \Phi) / (2 + SIN\ 2\ \Phi)$$

wherein X = R cos Φ and Y = R sin Φ apply to the picture-to-picture difference signals, with R being the radius signal.

**3.** A circuit arrangement as claimed in claim 1, **characterized in that** the coefficients for controlling the transversal filter above the limit radius only depend on the angle (Φ) in accordance with the equations

$$Kb = 1/4 * (5 + SIN\ 2\ \Phi) / (2 + SIN\ 2\ \Phi)$$

$$Ka = 3/8 * (1 + SIN\ 2\ \Phi - COS\ 2\ \Phi)/(2 + SIN\ 2\ \Phi)$$

$$Kc = 3/8 * (1 + SIN\ 2\ \Phi + COS\ 2\ \Phi)/(2 + SIN\ 2\ \Phi)$$

wherein X = R cos Φ and Y = R sin Φ apply to the picture-to-picture difference signals, with R being the radius signal.

**4.** A circuit arrangement as claimed in claim 1, **characterized in that** the picture-to-picture signals (X, Y, Z) derived from three time-sequential television pictures (A, B, C) are determined from two of the consecutive television pictures and are applied to a coordinate transformation device (19) for converting the signals in Cartesian coordinates into spherical coordinate signals, **in that** the output signals of the transformation device (19) representing the respective angle and the corresponding radius are applied to a programmable read-only memory (20) comprising a table, and **in that** the generated coefficient signals (Ka, Kc, Kd) can be derived at the outputs of said memory for controlling the transversal filter.

**5.** A video-technical apparatus comprising a circuit arrangement as claimed in claim 1.

**6.** A method of eliminating interference signals from video signals by means of motion-adaptive filtering with a second or higher-order transversal filter which is controlled by a motion detector, **characterized in that** a multidimensional motion detector (Fig. 2) generates coefficients for controlling the transversal filter, **in that** the motion detector converts signals (X1, Y1) in Cartesian coordinates, derived from at least two picture-to-picture difference signals (X, Y) generated from the video signal, into polar or spherical coordinate signals (19), and **in that** the motion detector derives the coefficients from the polar or spherical coordinate signals (20), wherein, above a limit radius of the polar or spherical coordinates, the coefficients depend only on the angle of said coordinates.

## Revendications

**1.** Circuit de suppression de signaux de perturbation de signaux vidéo à l'aide d'un filtrage à adaptation au mouvement avec un filtre transversal (48 - 51) de deuxième ordre ou plus qui est commandé par un détecteur de mouvement (47),
**caractérisé en ce** qu'un détecteur de mouvement pluridimensionnel (Fig. 2) de production de coefficients (Ka, Kc, Kd) est prévu pour la commande du filtre transversal et **que** le détecteur de mouvement comporte des moyens (19) pour la transformation de signaux (XI, YI) présents en coordonnées cartésiennes qui sont dérivés d'au moins deux signaux différentiels d'une image à l'autre (X, Y) produits du signal vidéo qui sont prévus dans des signaux de coordonnées polaires ou sphériques (R; Q; R, Q, ϑ) (19) et
**que** le détecteur de mouvement présente des moyens (20) pour la dérivation des coefficients des signaux de coordonnées polaires ou sphériques, les coefficients ne dépendant que de l'angle desdites cordonnées au-dessus d'un rayon-limite des cordonnées polaires ou sphériques.

**2.** Circuit selon la revendication 1,
**caractérisé en ce**
**que** les coefficients Kb, Ka, Kc pour la commande du filtre transversal au-delà du rayon limite (R0) dépendent seulement de l'angle (Φ) selon les équations

$$Kb = 1/(2 + SIN\ 2\ \Phi)$$

$$Ka = 0{,}5 * (1 + SIN\ 2\ \Phi - COS\ 2\ \Phi) / (2 + SIN\ 2\ \Phi)$$

$$Kc = 0{,}5 * (1 + SIN\ 2\ \Phi - COS\ 2\ \Phi)/(2 + SIN\ 2\ \Phi),$$

X = R cos Φ et Y = R sin Φ, avec R comme signal de rayon, étant appliqués pour les signaux différentiels d'une image à l'autre.

**3.** Circuit selon la revendication 1,
**caractérisé en ce**
**que** les coefficients pour la commande du filtre transversal au-delà du rayon limite dépendent seulement de l'angle (Φ) conformément aux équations:

$$Kb = ¼ * (5 + SIN\ 2\ \Phi) / (2 + SIN\ 2\ \Phi)$$

$$Ka = 3/8 * (1 + SIN\ 2\ \Phi - COS\ 2\ \Phi) / (2 + SIN\ 2\ \Phi)$$

$$Kc = 3/8 * (1 + SIN\ 2\ \Phi - COS\ 2\ \Phi) / (2 + SIN\ 2\ \Phi),$$

X = R cos Φ et Y = R sin Φ, avec R comme signal de rayon, étant appliqués pour les signaux différentiels d'une image à l'autre.

**4.** Circuit selon la revendication 1,
**caractérisé en ce**
**que** les signaux différentiels d'une image à l'autre (X, Y, Z) dérivés de trois images de télévision (A, B, C) successives dans le temps sont déterminés à partir de deux des images de télévision successives respectives et amenés à un dispositif de transformation des coordonnées (19) pour la transformation des signaux présents dans les coordonnées cartésiennes en signaux de coordonnées sphériques;
**que** les signaux de sortie du dispositif de transformation (19) représentant l'angle respectif et le rayon correspondant sont amenés à une mémoire de lecture (0) programmable contenue dans un tableau et que les signaux de coefficients (Ka, Kc, Kd) produits peuvent être prélevés à ses sorties pour la commande du filtre transversal.

**5.** Appareil vidéotechnique avec un circuit selon la revendication 1.

**6.** Procédé de suppression des signaux de perturbation de signaux vidéo à l'aide du filtrage à adaptation au mouvement avec un filtre transversal de deuxième ordre ou plus qui est commandé par un détecteur de mouvement,
**caractérisé en ce**
**qu'**un détecteur de mouvement (Fig. 2) pluridimensionnel produit des coefficients pour la commande du filtre transversal et
**que** le détecteur de mouvement transforme les signaux présents (XI, YI) en coordonnées cartésiennes qui sont dérivés d'au moins deux signaux différentiels d'une image à l'autre (X, Y) produits à partir du signal vidéo en signaux de coordonnées polaires ou sphériques et que le détecteur de mouvement déduit les coefficients des signaux de coordonnées polaires ou sphériques, les coefficients dépendant seulement de l'angle desdites coordonnées au-delà d'un rayon-limite des coordonnées polaires ou sphériques.

FIG. 1

DIG.VIDEO

$Ka(A-B)+B+Kc(C-B)$

$Ka(A-B)$

$Kc(C-B)$

MIX

Ka

Kc

FIG.2

EP 0 794 659 B1

(0 1 0)     (1 1 0)

(A B C)

(0 1 1)     (1 0 0)

(0 0 1)     (1 0 1)

FIG. 3

Y=B−C

φ

R

φ

X=A−B

FIG. 4

FIG. 5a

FIG. 5b

FIG. 6

EP 0 794 659 B1

FIG.7